(19) **Europäisches Patentamt / European Patent Office / Office européen des brevets**

(11) **EP 2 905 667 B1**

(12) **EUROPEAN PATENT SPECIFICATION**

(45) Date of publication and mention
of the grant of the patent:
**21.06.2017 Bulletin 2017/25**

(51) Int Cl.:
***G05B 23/02*** *(2006.01)*

(21) Application number: **14154669.7**

(22) Date of filing: **11.02.2014**

(54) **Slewing device monitoring apparatus and method**

Schwenkvorrichtungsüberwachungsvorrichtung und Verfahren

Appareil de surveillance de dispositif de giration et procédé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.08.2015 Bulletin 2015/33**

(73) Proprietor: **Sandvik Intellectual Property AB
811 81 Sandviken (SE)**

(72) Inventors:
• **Feger, Frank
  8700 Loeben (AT)**
• **Wilde, Andreas
  06242 Großkayna (DE)**

(56) References cited:
**DD-A1- 218 641     DE-A1-102005 023 252**

EP 2 905 667 B1

**Description**

Field of invention

The present invention relates to a method of monitoring performance of a slewing device of a material processing or handling plant and in particular, although not exclusively to a method of predicting an operational life-time of the slewing device based on measuring real-time force related parameters that relate to tilting moments applied to the slewing device.

Background art

Slewing devices are used for a wide range of mobile material processing or handling machines and provide a rotational connection between an undercarriage or support assembly and an upper superstructure. A variety of different slewing devices exist including for example roller-type bearings, bogie wheel-type bearings, multiple raceway or rolling-element bearings. However, common to all the bearing types is the capacity for the bearing to provide rotation adjustment of the superstructure carried by the undercarriage.

The selection of the type and geometry of the slewing device are typically supported by nominal design life-time calculations. Such calculations account for exposure of the slewing device during use to different load situations and machine movements when fulfilling its operational tasks. For example, a reduction in the actual bearing life-time versus the predicted value is common due to premature degradation of the bearing during use and in particular the premature wear of the internal components such as rolling elements, cages, raceways, wheels etc., the ingress of contaminants into the bearing, and a lack of lubrication for example. Slewing device life-time calculations for roller-type bearings are typically made using the International standard DIN/ISO 281.

Machine downtime due to slewing device repair or maintenance is undesirable and therefore accurately predicting maintenance periods or the long term operational life-time of the machine accurately is desirable. DD 218 641 and DE 10 2005 023 252 describe systems for determining a degree of damage and remaining life-time of components parts of large-scale processing plants.

However, conventional electrical monitoring systems are directed to providing a wear status of the component parts so as to provide a warning indication that is triggered when a critical status or critical value has been reached. Such insulations require significant modifications of the moving component parts (and in particular the housings or mountings) to integrate the electrical monitoring components. Additionally, current preventative maintenance strategies to support slewing device wear status involve monitoring by regular inspections and conducting manual measurements of distances at defined reference points for example drop height and tilt measurements. Such inspections are made by *ad-hoc* visual checks. Additionally, such electrical monitoring systems are disadvantageous by providing feedback that damage has already been incurred. However, what is required is a method of accurately and reliably forecasting the wear status or operational life-time of the slewing device based on actual usage prior to significant or accelerated wear.

Summary of the Invention

It is an objective of the present invention to provide a method of monitoring performance of a slewing device of bulk solids handing apparatus that supports a superstructure mounted upon a support structure or chassis assembly that provides a prediction of an operational life-time of the slewing device based on the conditions of use of the bearing. It is a further specific objective to provide prediction of the operational life-time of the slewing device based on measuring real-time force related parameters that relate to tilting forces applied by the superstructure to the slewing device.

It is a further specific objective to more accurately predict the operational life-time of the slewing device based on real-time load assessment prior to significant damage of the slewing device such that corrective action may then be taken.

According to a first aspect of the present invention there is provided a method of monitoring performance of a slewing device of a material processing or handling apparatus in which the slewing device supports a superstructure mounted upon a support structure, the method comprising: measuring a real-time force related parameter using at least one sensor relating to an external load force acting on the superstructure; determining a real-time tilting moment applied by the superstructure to the slewing device based on the force related parameter and at least one geometry parameter describing a geometrical relationship between the load force and the slewing device; predicting an operational life-time of the slewing device based on the real-time tilting moment.

Reference within this specification to a *'tilting moment'* encompasses similar and equivalent quantitative expressions and forces such as moment of force, moment of inertia, moment, force moment, moment load, torque as applied to an axis extending centrally through the slewing device (being aligned perpendicular to a plane of the bearing). Additionally, reference within this specification to a *'slewing device'* encompasses similar and equivalent expressions such as slew bearings, slew rings, turntables and the like.

Optionally, the force related parameter comprises any one or a combination of the following set of: mass; pressure; tension; compression; stress; deformation; torque. Such parameters may be determined by one or a plurality of sensors that are active to continually determine the appropriate force related measurement as the machine is operative or when idle. The present method is also capable of including the axial force applied by the superstructure onto the slewing device as part of the operational life-time determination. The present method is advantageous to provide real-time predictions of the remaining life-time of the slewing device based on active monitoring of the external forces applied to the superstructure and hence the slewing device.

Advantageously, the external load force that creates the force related parameter may exist between at least two components of the superstructure. Such an arrangement is convenient for accurate load evaluations. Optionally, the at least two components are movable relative to one another and/or the slewing device. For example, a force applied to one of the components may cause the component to move and this movement may then be suitably monitored to determine the magnitude of the external force applied to the superstructure.

Optionally, the at least two components comprise a boom arm and a part of the superstructure; wherein the boom arm is capable of pivoting about a pivot axis such that a pivoting movement of the boom arm affects the real-time tilting moment created by the superstructure acting upon the slewing device. The sensor to determine the force related parameter may be positioned at any location of the superstructure or at a remote location but forming part of a circuit, network or coupling structure extending between the sensor and the components of the superstructure that are used in the determination of the external load.

Optionally, where the two components comprise the boom arm and a region of the superstructure, the force related parameter comprises a pressure of a fluid at a power operated linear actuator mounted at the superstructure to support a position of the boom arm at the superstructure. Optionally, the force related parameter comprises a tension of a rope or a cable that supports a position of the boom arm at the superstructure. Measuring the pressure or tension in the luffing cylinders or supporting cable or rope is a convenient and reliable mechanism for determining the external load. Such an arrangement and method does not involve considerable modification of the superstructure to accommodate the sensors and data can be obtained and transferred conveniently to a suitable data storage and processing utility located at the plant at a remote location.

Optionally, the at least one geometry parameter provides a relationship between a geometrical position of the pivot axis of the boom arm and a tilting moment axis extending through the slewing device about which the real-time tilting moment is applied. As will be appreciated, the geometry parameter may comprise any quantitative value or values that describe a geometrical relationship between regions, component parts, axes, rotational centres, etc., of the superstructure and the slewing device and in particular a correlation between the external load force and the creation of a tilting moment of the slewing device.

Preferably the method further comprises determining a resulting slewing device tilting moment by correlating the determined slewing device tilting moment with a slewing device reference service life curve based on a resulting moment and an axial load of the slewing device. The method further comprises obtaining a load factor of the slewing device based on the resulting slewing device tilting moment and the determined slewing device tilting moment. The method may then further comprise applying a bearing specific exponent to the load factor to obtain the operational life-time of the slewing device. Preferably, the method further comprises repeating the steps of determining the resulting slewing device tilting moment and the load factor based on a plurality of determined slewing device tilting moments to obtain a compiled operational life-time of the slewing device based on a plurality of external load forces; and applying operating time parameters to each of the operational life-times that are based on the respective external loads. Such processing steps are undertaken in accordance with international standards DIN/ISO 281 having consideration of the bearing type installed within the plant and in particular the nature and geometry of the components of the slewing device with reference to the international standard DIN/ISO 281. The utilisation of slewing device reference service life curves is in accordance with the international standard DIN/ISO 281 and similarly, the determination of the *'resulting moment'*, *'load factor'* and *'compiled operational life-time'* are in accordance with the international standard DIN/ISO 281 as will be appreciated by those skilled in the art.

According to a second aspect of the present invention there is provided a system of predicting an operational life-time of a slewing device of a material processing or handling machine comprising: a slewing device mounting a superstructure upon a support structure; a boom arm pivotally mounted at the superstructure, the boom arm having a distal end capable of being raised and lowered relative to the superstructure; at least one actuator connected to the boom arm and the superstructure to actuate the raising and lowering of the distal end relative to the superstructure; and at least one sensor to monitor a real-time force related parameter at the actuator; the system comprising the method of monitoring performance of the slewing device as claimed herein. Such an arrangement is advantageous to determine accurately the remaining operational life-time of a slewing device in use and exposed to practical and working external loads as the plant is operative. Accordingly, the processing plant operators and service personnel via the present automated or semi-automated method/system are then capable of making adjustments to the designated service schedule and maintenance periods as the remaining operational life-time is corrected in real-time based on the external loads that are measured continually or at regular intervals with the remaining operational life-time being output in real-time.

Optionally, the material processing or handling machine comprises any one or a combination of the following set of: a bucket wheel reclaimer comprising a plurality of buckets rotatably mounted at the distal end of the boom arm; a stacker; a spreader; a stacker/reclaimer combination; a crane; a ship loader or unloader; a bucket wheel excavator; a mobile crusher. Optionally, the processing or handling machine may comprise any machine that comprises a boom arm mounted at a superstructure and capable of slewing on a chassis via a slewing device. Optionally, the processing or handling machine/apparatus is a mobile unit mounted on a wheel and/or track based undercarriage.

Brief description of drawings

A specific implementation of the present invention will now be described, by way of example only, and with reference to the accompanying drawings in which:

Figure 1 is an external perspective view of a bucket wheel reclaimer processing machine in which a boom arm mounting a rotating bucket wheel is supported at a superstructure mounted upon a support structure via a slewing device according to a specific implementation of the present invention;

Figure 2 is a schematic flow diagram detailing the determination of the slewing device life-time based on a measurements of an external load applied to the superstructure;

Figure 3 is a schematic illustration of relative geometries of selected components of the processing machine together with selected tilting moments of various processing machine components;

Figure 4 is a schematic flow diagram detailing the further steps employed in the prediction of the operation life-time of the slewing device based on external load forces at the superstructure;

Figure 5A details selected parameters of a roller track bearing having corresponding characteristics to the slewing device of figure 1;

Figure 5B is a service life curve and technical data for the bearing of the reclaimer processing machine of figure 1 used in the prediction of the operation life-time of the slewing device.

Detailed description of preferred embodiment of the invention

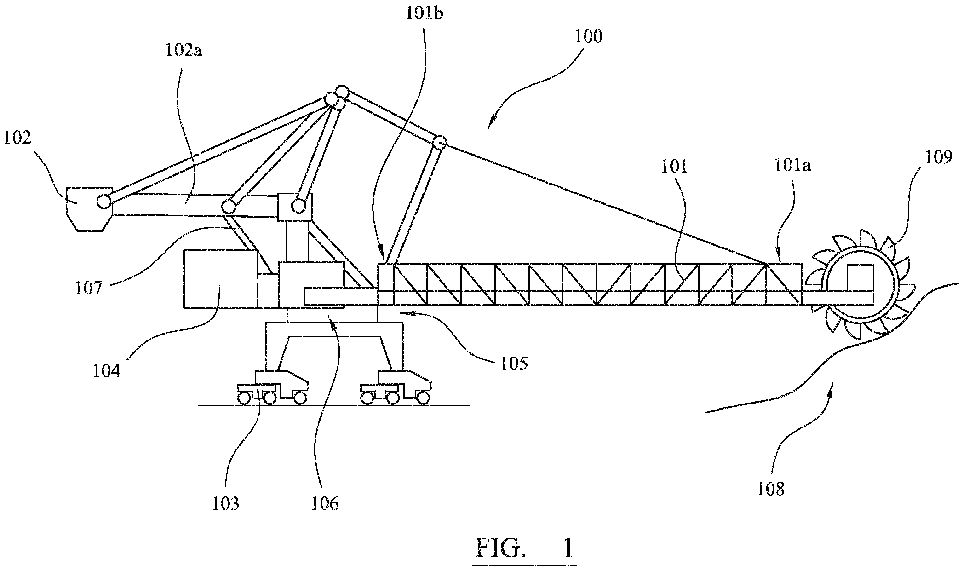

Referring to figure 1, a bulk material processing plant in the form of a bucket wheel reclaimer 100 comprises a superstructure indicated generally by reference 104 pivotally mounted upon a support structure 105 via a slewing device 106. Support structure 105 comprises a suitable chassis 103 adapted to allow transport of the reclaimer 100 over the ground to access different locations of bulk material 108 to be processed by machine 100.

The superstructure 104 comprises a boom arm 101 having a distal end 101a mounting a bucket wheel 109 and an opposite proximal end 101b pivotally mounted at the superstructure 104. Stabilisation of machine 100 is provided by a counterweight 102 that extends from superstructure 104 at an opposite side relative to boom arm 101 to counter balance boom 101, bucket wheel 109 and any additional load force applied to boom arm 101 such as the weight of material 108 collected by the bucket wheel 109. A pair of luffing cylinders 107 is attached to boom arm 101 and a region of superstructure 104 so as to stabilise and support pivoting movement of boom arm 101 at superstructure 104. According to the specific embodiment, luffing cylinders 107 extend between boom arm proximal end 101b and a counterweight support boom 102a that mounts counterweight 102 at support structure 105. As will be appreciated, a loading force at or towards the boom arm distal end 101a is proportional to a force and in particular a pressure at luffing cylinders 107.

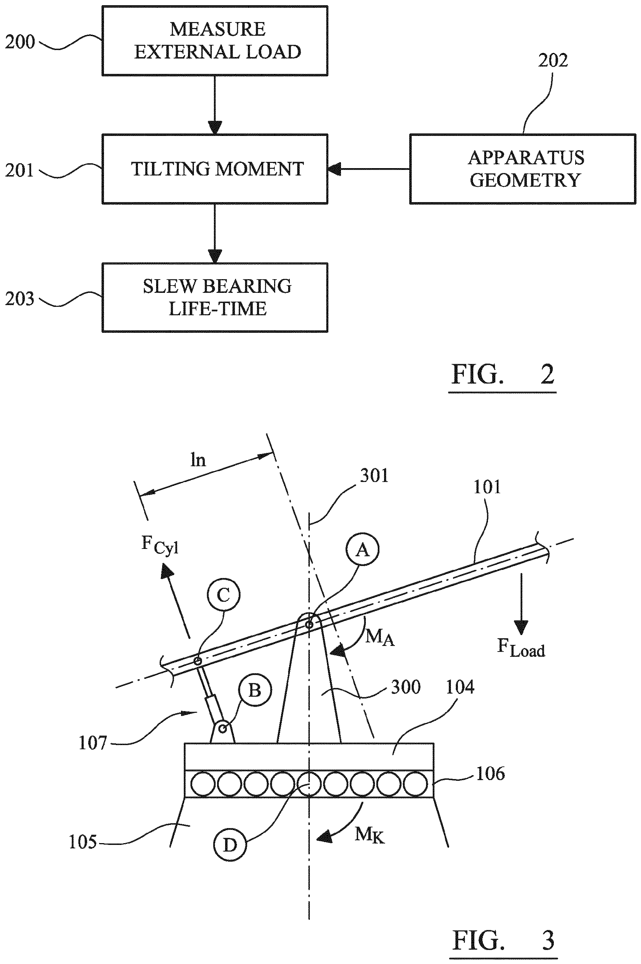

Referring to figure 2, the present slewing device performance monitoring comprises measuring an external load applied to superstructure 104 at step 200 to determine a tilting moment applied to the slewing device 106 by the superstructure 104 at step 201. A slewing device tilting moment determination includes consideration of the relative geometries of the various components of the superstructure 104 and in particular the various pivot points of the boom arm 101 and those components 107 that support the boom arm 101. The geometrical relationships between the various points and components of the superstructure further include relative distances, lengths and/or angles between specific regions of the components of the superstructure 104 relative to one another and slewing device 106. The apparatus geometry by way of specific geometry parameters is applied to the slewing device tilting moment determination via step 202.

The present method uses the methodology and calculations of the international standard DIN/ISO 281 that allows calculation of the dynamic load rating and service life of slewing devices. The slewing device tilting moment and operational slewing device life-time calculations and considerations set-out in the international standard DIN/ISO 281.

Figure 3 illustrates a simplified schematic of the relative geometrical relationship of selected components of the superstructure 104 of figure 1. As illustrated, boom arm 101 is mounted at superstructure 104 via a boom mount 300 that projects upwardly from a part of superstructure 104 located immediately above slewing device 106 and typically referred to as a slew deck. Boom arm 101 is mounted at boom mount 300 via a pivot point A.

According to the schematic of figure 3, luffing cylinders 107 are attached between superstructure 104 and a part of boom arm 101. Each luffing cylinder 107 comprises a first pivot point B attached to superstructure 104 and a second pivot point C attached to boom arm 101. As illustrated, a separation distance between the pivot points A and C is represented by distance $l_n$. Accordingly, an external load force $F_{load}$ acting on boom arm 101 is translated to a force $F_{cyl}$ transmitted through luffing cylinders 107. The magnitude of $F_{cyl}$ is proportional to a pressure of the hydraulic fluid within luffing cylinders 107. As will be appreciated, a tilting moment $M_A$ about the pivot point A of boom arm 101 may be expressed as

$$M_A = F_{cyl} \cdot l_n \qquad (1)$$

The relationship of the tilting moment $M_k$ of slewing device 106 about tilting axis D may be expressed as

$$M_k \cong M_A. \qquad (2)$$

Accordingly, an axial load of superstructure 104 extending through axis 301 that is transmitted through slewing device 106 is proportional to the force acting through the luffing cylinders $F_{cyl}$. As will be appreciated, further considerations of the geometrical relationship of the various components of the processing plant 100 may be applied in the determination of $M_k$ using known methods of resolving forces. For example, the present method may typically comprise consideration of the relative magnitude and size and position of counterweight 102 together with consideration of additional intermediate pivoting or moving components forming part of superstructure 104 in position between or acting on boom arm 101 and slewing device 106.

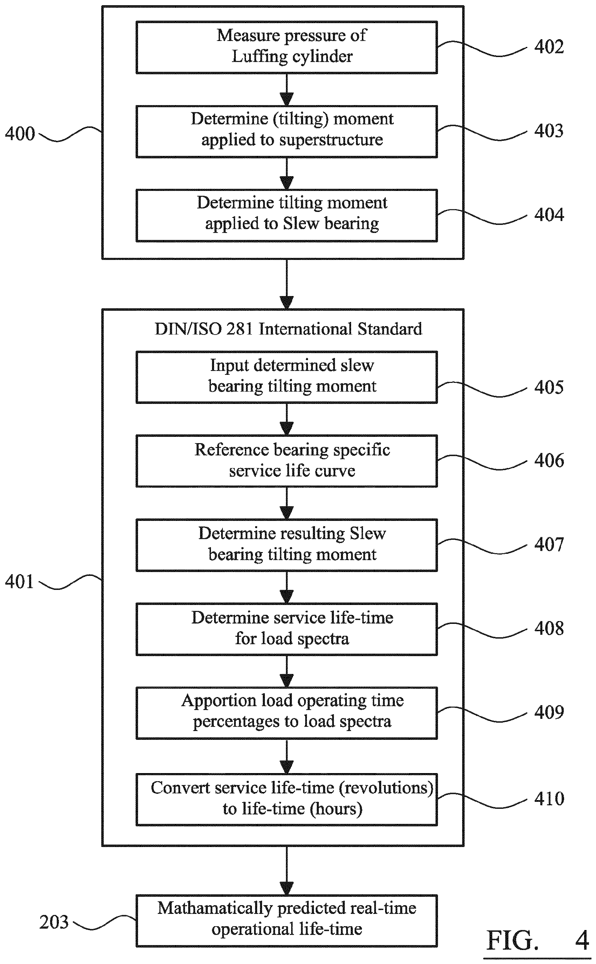

According to a specific implementation of the present invention, a pressure of the hydraulic fluid at luffing cylinders 107 is determined at stage 402 of the slewing device life-time prediction referring to figure 4. As will be appreciated, an alternative real-time force related parameter may comprise a tension within a cable or rope supporting the position of boom arm 101 relative to superstructure 104. The tilting moment $M_A$ applied by the superstructure is determined at stage 403 and this moment force is resolved to the tilting moment $M_k$ applied onto the slewing device 106 at stage 404. The determination of the real-time tilting moment $M_k$ of the slewing device 106 is represented generally by reference 400 using the measurements of the real-time force related parameter (luffing cylinder pressure) as the machine is operative. As will be appreciated, the luffing cylinder pressure is obtained via at least one sensor optionally positioned at superstructure 104. Sensor readings are determined and stored via suitable electronic software and hardware that may be positioned at superstructure 104 or at a remote location with data being transferred and accessible via suitable and conventional data management utilities comprised wired or wireless computer networks, servers, PCBs, comms., etc.

According to the specific implementation, the pressure measurements are taken at various operational stages of the plant 100 including in particular slewing with or without a load at the bucket wheel 109 and at a plurality of different pivoting angles of boom arm 101 relative to the remainder of superstructure 104.

According to the standard DIN/ISO 281, a resulting moment of the slewing device $M_{ko}$ may be correlated with a tilting moment for a given bearing via a load factor expressed as

$$f_L = \frac{F_{ao}}{F_a} = \frac{M_{ko}}{M_k} \qquad (3)$$

where $f_L$ is the load factor, $F_{ao}$ is the axial load on the load bearing, $F_a$ is a *'reference load'*, $M_{ko}$ is the resulting tilting moment on a reference curve and $M_k$ is the tilting moment.

The slewing device service life (expressed in revolutions) may then be calculated based on the reference service life curve for the bearing and expressed as

$$G = (f_L)^P \cdot 30\,000 \qquad (4)$$

where G is the service life expressed in revolutions and P is an exponent being P = 3 for ball bearing and P = 10/3 for roller bearings.

As will be appreciated, it follows that the predicted operational life-time of the bearing may be obtained using a load spectra involving compiling slewing device tilting moments for different operational loads having respective operational time periods expressed as percentages. The compiled and overall slewing device service life-time may be expressed as

$$G_{ges} \;=\; \frac{100}{\frac{ED_1}{G_1} + \frac{ED_2}{G_2} + \cdots + \frac{ED_i}{G_i}} \qquad (5)$$

where $G_{ges}$ is the overall predicted slewing device operational life-time, $ED_i$ is the percentage of operating time for the given loads and $G_i$ is the service life for load spectra.

Referring to figure 4, the slewing device tilting moment $M_k$ is input at step 405. The appropriate service life-time curve for the specific slewing device is referenced at step 406. The resulting *'reference load'* $M_{ko}$ is then determined at step 407. The respective surface-life-time values are then obtained for each load applied to the slewing device (via the superstructure) at step 408. At step 409, the relevant operating time factors are assigned to each load that represents the time period over which the load is being applied to the superstructure and the slewing device. For example, where the bucket wheel is active to recover and extract bulk material, this specific load will be applied for the total time the reclaimer is operative in this function over a predetermined time period. The slewing device operational life-time (prior to failure) is then obtained and expressed as revolutions. At step 410, the life-time is converted to hours by an appropriate rotational angle per unit time factor. A real-time operational life-time for the slewing device is then obtained 203. The calculations and steps 405 to 410, using equations 3 to 5, represent the calculation 401 of the real-time slewing device operational life-time based on the slewing device tilting moment and the initial external load forces applied to the superstructure as detailed at stage 400.

*Example 1*

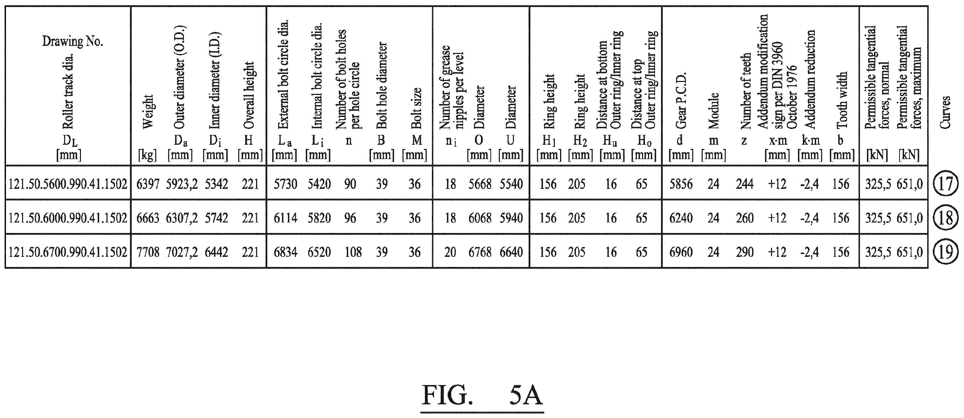

Slewing device operational life-time was predicted for a bucket wheel reclaimer 100 of the type of figure 1 and have characteristics corresponding to the roller track slewing device of figure 5A based on a plurality of operational loads acting on superstructure 104. In particular, the hydraulic fluid pressure within luffing cylinders 107 was measured to determine the corresponding forces acting through the luffing cylinders 107 and tilting moments of the boom arm. The results are shown in table 1.

**Table 1: Load inputs for slewing device tilting moment calculations**

| F[kNm] | M[kNm] |
|---|---|
| 0 | 0 |
| 16775 | 77830 |
| 34845 | 93100 |
| 43215 | 87110 |
| 57420 | 38075 |
| 62225 | 0 |

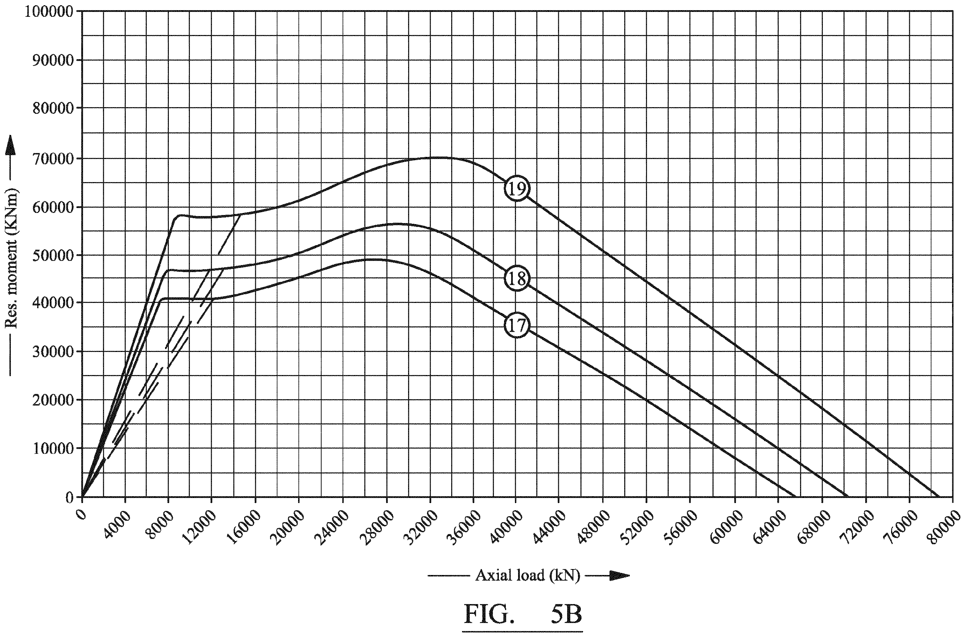

Using an exponent where P = 3.33 and $f_L$ = 1.18 the measured or determined slewing device tilting moments $M_K$ were correlated with the reference load slewing device tilting moments via equations 3 and 4 above and by referencing a reference service life curve illustrated in figure 5B. The results of the respective load factors $f_L$ are shown in table 2.

**Table 2: Calculated slewing device tilting moments and load factors.**

| $F_a$ | $M_k$ | [%] | $f_{ao}$ | $M_{ko}$ | $f_L$ |
|---|---|---|---|---|---|
| 16622 | 36547 | 1.50 | 40502 | 89051 | 2.44 |
| 16622 | 32951 | 2.10 | 43480 | 86194 | 2.62 |
| 16622 | 27856 | 2.40 | 46079 | 77223 | 2.77 |

(continued)

| $F_a$ | $M_k$ | [%] | $f_{ao}$ | $M_{ko}$ | $f_L$ |
|---|---|---|---|---|---|
| 17590 | 245 | 7.83 | 62116 | 867 | 3.53 |
| 17590 | 3841 | 10.97 | 60556 | 13223 | 3.44 |
| 17590 | 8936 | 12.53 | 58476 | 29706 | 3.32 |
| 17818 | 11673 | 15.67 | 57473 | 37652 | 3.23 |
| 17818 | 15268 | 21.93 | 54837 | 46990 | 3.08 |
| 17818 | 20363 | 25.07 | 51425 | 58770 | 2.89 |

The values under '%' relates to the operating time for each particular load. Accordingly, the overall operational life-time for a slewing device within a bucket wheel reclaimer 100 of figure 1 having a bearing type 121.70.7584 exposed to the loads of table 1, comprises a service life-time of 738,818 revolutions which based on an average speed over time of 0.066 l/min provides an operational service life-time of 186,570 hours.

The on-going, real-time calculation of service life-time of the machine during operation may then be compared to the original value calculated in the design phase of the machine to determine, whether a machine is over- or under-utilized and therefore will have a life-time that is shorter or longer than the original estimate. The present slewing device information and data may also be used as part of further data processing operations to assess other performance criteria of the machine and to help manage the machine including for example to manage spare part supply, maintenance schedules etc.

## Claims

1.  A method of monitoring performance of a slewing device (106) of a material processing or handling apparatus (100) in which the slewing device (106) supports a superstructure (104) mounted upon a support structure (105), the method comprising:

    measuring a real-time force related parameter using at least one sensor relating to an external load force acting on the superstructure (104);
    determining a real-time tilting moment applied by the superstructure (104) to the slewing device (106) based on the force related parameter and at least one geometry parameter describing a geometrical relationship between the load force and the slewing device (106);
    predicting an operational life-time of the slewing device (106) based on the real-time tilting moment.

2.  The method as claimed in claim 1 wherein the force related parameter comprises any one or a combination of the following set of:

    • mass;
    • pressure;
    • tension;
    • compression;
    • stress;
    • deformation;
    • torque.

3.  The method as claimed in claims 1 or 2 wherein the external load force that creates the force related parameter exists between at least two components of the superstructure (104).

4.  The method as claimed in claim 3 wherein the at least two components are movable relative to one another and/or the slewing device (106).

5.  The method as claimed in claim 4 wherein the at least two components comprise a boom arm (101) and a part of the superstructure (104);
    wherein the boom arm (101) is capable of pivoting about a pivot axis such that a pivoting movement of the boom arm (101) affects the real-time tilting moment created by the superstructure (104) acting upon the slewing device (106).

6. The method as claimed in claim 5 wherein the force related parameter comprises a pressure of a fluid at a power operated linear actuator (107) mounted at the superstructure (104) to support a position of the boom arm (101) at the superstructure (104).

7. The method as claimed in claim 5 wherein the force related parameter comprises a tension of a rope or a cable that supports a position of the boom arm (101) at the superstructure (104).

8. The method as claimed in claims 5 wherein the at least one geometry parameter provides a relationship between a geometrical position of the pivot axis of the boom arm (101) and a tilting moment axis extending through the slewing device (106) about which the real-time tilting moment is applied.

9. The method as claimed in any preceding claim comprising determining a resulting slewing device tilting moment by correlating the determined slewing device (106) tilting moment with a slewing device reference service life curve based on a resulting moment and an axial load of the slewing device (106).

10. The method as claimed in claim 9 comprising obtaining a load factor of the slewing device (106) based on the resulting slewing device tilting moment and the determined slewing device tilting moment.

11. The method as claimed in claim 10 further comprising applying a bearing specific exponent to the load factor to obtain the operational life-time of the slewing device (106).

12. The method as claimed in claim 11 further comprising repeating the steps of determining the resulting slewing device tilting moment and the load factor based on a plurality of determined slewing device tilting moments to obtain a compiled operational life-time of the slewing device based on a plurality of external load forces; and applying operating time parameters to each of the operational life-times that are based on the respective external loads.

13. A system of predicting an operational life-time of a slewing device (106) of a material processing or handling machine (100) comprising:

   a slewing device (106) mounting a superstructure (104) upon a support structure (105);
   a boom arm (101) pivotally mounted at the superstructure (104), the boom arm (101) having a distal end (101a) capable of being raised and lowered relative to the superstructure (104);
   at least one actuator (107) connected to the boom arm (101) and the superstructure (104) to actuate the raising and lowering of the distal end (101a) relative to the superstructure (104); and
   at least one sensor to monitor a real-time force related parameter at the actuator (107);

   the system comprising the method of monitoring performance of the slewing device (106) as claimed in any preceding claim.

14. The system as claimed in claim 13 wherein the material processing machine (100) comprises any one or a combination of the following set of:

   • a bucket wheel reclaimer comprising a plurality of buckets rotatably mounted at the distal end (101a) of the boom arm (101);
   • a stacker;
   • a spreader;
   • a stacker/reclaimer combination;
   • a crane;
   • a ship loader or unloader;
   • a bucket wheel excavator;
   • a mobile crusher

**EP 2 905 667 B1**

**Patentansprüche**

1. Verfahren zum Überwachen der Leistung einer Schwenkeinrichtung (106) einer Vorrichtung (100) zum Verarbeiten oder Handhaben von Material, wobei die Schwenkeinrichtung (106) einen Überaufbau (104) trägt, der auf einem Trägeraufbau (105) montiert ist, wobei das Verfahren aufweist:

   Messen eines Kraftparameters in Realzeit unter Verwendung zumindest eines Sensors, der sich auf eine externe Belastungskraft bezieht, welche auf den Überaufbau (104) wirkt,
   Bestimmen eines von dem Überaufbau (104) auf die Schwenkeinrichtung (106) aufgebrachten Kippmomentes in Realzeit, und zwar auf Basis des Kraftparameters und zumindest eines geometrischen Parameters, der eine geometrische Beziehung zwischen der Belastungskraft und der Schwenkeinrichtung (106) beschreibt,
   Vorhersagen der Betriebsstandzeit der Schwenkeinrichtung (106) auf Basis des Kippmomentes in Realzeit.

2. Verfahren nach Anspruch 1, wobei der Kraftparameter zumindest einen oder eine Kombination aus dem folgenden Satz von Parametern aufweist:

   • Masse,
   • Druck,
   • Zugspannung,
   • Druckspannung,
   • Spannung,
   • Verformung,
   • Drehmoment.

3. Verfahren nach Anspruch 1 oder 2, wobei die externe Belastungskraft, welche den Kraftparameter hervorruft, zwischen zumindest zwei Komponenten des Überaufbaus (104) auftritt.

4. Verfahren nach Anspruch 3, wobei die zumindest zwei Komponenten relativ zueinander oder relativ zu der Schwenkeinrichtung (106) bewegbar sind.

5. Verfahren nach Anspruch 4, wobei die zumindest zwei Komponenten einen Schwenkarm (101) und einen Teil des Überaufbaus (104) aufweisen,
   wobei der Schwenkarm (101) in der Lage ist, um eine Schwenkachse zu verschwenken, sodass eine Schwenkbewegung des Schwenkarmes (101) das durch den Überaufbau (104), welcher auf die Schwenkeinrichtung (106) einwirkt, erzeugte Kippmoment in Realzeit beeinflusst.

6. Verfahren nach Anspruch 5, wobei der Kraftparameter einen Druck eines Fluides eines kraftbetätigten linearen Betätigungselementes (107) aufweist, der an dem Überaufbau (104) montiert ist, um eine Position des Schwenkarmes (101) an dem Überaufbau (104) zu halten.

7. Verfahren nach Anspruch 5, wobei der Kraftparameter eine Zugspannung eines Seiles oder Kabels aufweist, welches eine Position des Schwenkarmes (101) an dem Überaufbau (104) hält.

8. Verfahren nach Anspruch 5, wobei der zumindest eine geometrische Parameter eine Beziehung zwischen einer geometrischen Position der Schwenkachse des Schwenkarmes (101) und einer Kippmomentachse bereitstellt, die sich durch die Schwenkeinrichtung (106) erstreckt und bzgl. welcher das Kippmoment in Realzeit aufgebracht wird.

9. Verfahren nach einem der vorstehenden Ansprüche, welches die Bestimmung eines sich ergebenden Kippmomentes der Schwenkreinrichtung aufweist, und zwar durch Korrelation des festgestellten Kippmomentes der Schwenkeinrichtung (106) mit einer Bezugslebensdauerkurve der Schwenkeinrichtung, basierend auf einem sich ergebenden Moment und einer axialen Last auf die Schwenkeinrichtung (106).

10. Verfahren nach Anspruch 9, welches das Erhalten eines Belastungsfaktors der Schwenkeinrichtung (106) aufweist, und zwar auf Basis des sich ergebenden Kippmomentes der Schwenkeinrichtung und des festgestellten Kippmomentes der Schwenkeinrichtung.

11. Verfahren nach Anspruch 10, welches weiterhin das Anwenden eines belastungsspezifischen Exponenten auf den Belastungsfaktor aufweist, um die Betriebslebensdauer der Schwenkeinrichtung (106) zu erhalten.

**12.** Verfahren nach Anspruch 11, welches weiterhin das Wiederholen der Schritte aufweist, dass das sich ergebende Kippmoment der Schwenkeinrichtung und des Belastungsfaktors bestimmt wird auf Basis einer Mehrzahl von festgestellten Kippmomenten der Schwenkeinrichtung, um eine zusammengesetzte Betriebslebensdauer der Schwenkeinrichtung auf der Basis einer Mehrzahl von externen Belastungskräften zu erhalten, und

Anwenden von Betriebsdauerparametern auf jede der Betriebslebensdauern, die auf entsprechenden externen Belastungen beruhen.

**13.** System zum Vorhersagen einer Betriebslebensdauer einer Schwenkeinrichtung (106) einer Maschine (100) zur Verarbeitung oder Handhabung von Material, welches aufweist:

eine Schwenkeinrichtung (106), die einen Überaufbau (104) auf einem Trägeraufbau (105) haltert,
einen Schwenkarm (101), der an dem Überaufbau (104) schwenkbar montiert ist, wobei der Schwenkarm (101) ein abgelegenes Ende (101 a) hat, welches relativ zu dem Überaufbau (104) angehoben und abgesenkt werden kann,
zumindest einen Betätiger (107), der mit dem Schwenkarm (101) und dem Überaufbau (104) verbunden ist um das Anheben und Absenken des abgelegenen Endes (101 a) relativ zu dem Überaufbau (104) zu bewirken, und
zumindest einen Sensor zur Überwachung eines Kraftparameters an dem Betätiger (107) in Realzeit,
wobei das System das Verfahren zum Überwachen der Leistungsfähigkeit der Schwenkeinrichtung (106) nach einem der vorstehenden Ansprüche aufweist.

**14.** System nach Anspruch 13, wobei die Materialverarbeitungsmaschine (100) zumindest einen oder eine Kombination aus dem folgenden Satz von Parametern aufweist:

• einen Schaufelradbagger mit einer Mehrzahl von Schaufeln, die am abgelegenen Ende (101 a) des Schwenkarmes (101) montiert sind,
• einen Aufnehmer,
• einen Absetzer,
• eine Kombination aus Absetzer/Aufnahmegerät,
• einen Kran,
• eine Lade- oder Entladevorrichtung,
• einen Schaufelradbagger,
• einen mobilen Brecher.

## Revendications

**1.** Procédé de surveillance des performances d'un dispositif d'orientation (106) d'un appareil de traitement ou de manipulation de matériaux (100) dans lequel le dispositif d'orientation (106) supporte une superstructure (104) montée sur une structure de support (105), le procédé comprenant les étapes consistant à :

mesurer un paramètre lié à la force en temps réel en utilisant au moins un capteur lié à une force de charge externe agissant sur la superstructure (104) ;
déterminer un moment d'inclinaison en temps réel appliqué par la superstructure (104) au dispositif d'orientation (106) sur la base du paramètre lié à la force et au moins un paramètre géométrique décrivant une relation géométrique entre la force de charge et le dispositif d'orientation (106) ;
prédire une durée de vie opérationnelle du dispositif d'orientation (106) sur la base du moment d'inclinaison en temps réel.

**2.** Procédé selon la revendication 1 dans lequel le paramètre lié à la force comprend l'un quelconque ou une combinaison de l'ensemble suivant constitué de :

la masse ;
la pression ;
la tension ;
la compression ;
la contrainte ;
la déformation ;
le couple.

**3.** Procédé selon les revendications 1 ou 2 dans lequel la force de charge externe qui crée le paramètre lié à la force existe entre au moins deux composants de la superstructure (104).

**4.** Procédé selon la revendication 3 dans lequel les au moins deux composants sont mobiles l'un par rapport à l'autre et/ou par rapport au dispositif d'orientation (106).

**5.** Procédé selon la revendication 4 dans lequel les au moins deux composants comprennent une flèche (101) et une partie de la superstructure (104) ;
dans lequel la flèche (101) est capable de pivoter autour d'un axe de pivot de sorte qu'un mouvement de pivotement de la flèche (101) affecte le mouvement d'inclinaison en temps réel créé par la superstructure (104) agissant sur le dispositif d'orientation (106).

**6.** Procédé selon la revendication 5 dans lequel le paramètre lié à la force comprend une pression d'un fluide d'un actionneur linéaire mécanique (107) monté au niveau de la superstructure (104) pour supporter une position de la flèche (101) au niveau de la superstructure (104).

**7.** Procédé selon la revendication 5 dans lequel le paramètre lié à la force comprend une tension d'une corde ou d'un câble qui supporte une position de la flèche (101) au niveau de la superstructure (104).

**8.** Procédé selon la revendication 5 dans lequel le au moins un paramètre géométrique fournit une relation entre une position géométrique de l'axe de pivot de la flèche (101) et un axe de moment d'inclinaison s'étendant à travers le dispositif d'orientation (106) autour duquel le moment d'inclinaison en temps réel est appliqué.

**9.** Procédé selon l'une quelconque des revendications précédentes comprenant la détermination d'un moment d'inclinaison de dispositif d'orientation résultant en corrélant le moment d'inclinaison de dispositif d'orientation (106) déterminé avec une courbe de vie de service de référence du dispositif d'orientation sur la base d'un moment résultant et d'une charge axiale du dispositif d'orientation (106).

**10.** Procédé selon la revendication 9 comprenant l'obtention d'un facteur de charge du dispositif d'orientation (106) sur la base du moment d'inclinaison de dispositif d'orientation résultant et du moment d'inclinaison de dispositif d'orientation déterminé.

**11.** Procédé selon la revendication 10 comprenant en outre l'application d'un exposant spécifique au roulement au facteur de charge pour obtenir la durée de vie opérationnelle du dispositif d'orientation (106).

**12.** Procédé selon la revendication 11 comprenant en outre la répétition des étapes consistant à déterminer le moment d'inclinaison de dispositif d'orientation résultant et le facteur de charge sur la base d'une pluralité de moments d'inclinaison de dispositif d'orientation déterminés pour obtenir une durée de vie opérationnelle compilée du dispositif d'orientation sur la base d'une pluralité de forces de charges externes ; et
appliquer des paramètres de temps de fonctionnement à chacune des durées de vie opérationnelles qui sont basées sur les charges externes respectives.

**13.** Système de prédiction d'une durée de vie opérationnelle d'un dispositif d'orientation (106) d'une machine de traitement ou de manipulation de matériaux (100) comprenant :

un dispositif d'orientation (106) montant une superstructure (104) sur une structure de support (105) ;
une flèche (101) montée avec possibilité de pivotement au niveau de la superstructure (104), la flèche (101) ayant une extrémité distale (101a) capable d'être relevée et abaissée par rapport à la superstructure (104) ;
au moins un actionneur (107) connecté à la flèche (101) et à la superstructure pour actionner le relèvement et l'abaissement de l'extrémité distale (101a) par rapport à la superstructure (104) ; et
au moins un capteur pour surveiller un paramètre lié à la force en temps réel au niveau de l'actionneur (107) ;
le système comprenant le procédé de surveillance des performances du dispositif d'orientation (106) selon l'une quelconque des revendications précédentes.

**14.** Système selon la revendication 13 dans lequel la machine de traitement de matériaux (100) comprend l'un quelconque ou une combinaison de l'ensemble suivant constitué de :

• un engin de reprise à godets comprenant une pluralité de godets montés avec possibilité de rotation au niveau de l'extrémité distale (101a) de la flèche (101) ;
• un convoyeur empileur ;
• un épandeur ;
• une combinaison convoyeur empileur / engin de reprise ;
• une grue ;
• un chargeur ou déchargeur de navire ;
• une excavatrice à godets ;
• un concasseur mobile.

FIG. 1

200 — MEASURE EXTERNAL LOAD

201 — TILTING MOMENT ← 202 — APPARATUS GEOMETRY

203 — SLEW BEARING LIFE-TIME

FIG. 2

$l_n$

$F_{Cyl}$

301

101

Ⓒ

Ⓐ

$M_A$

300

$F_{Load}$

104

Ⓑ

107

106

105

Ⓓ

$M_K$

FIG. 3

Measure pressure of
Luffing cylinder — 402

Determine (tilting) moment
applied to superstructure — 403

400

Determine tilting moment
applied to Slew bearing — 404

---

DIN/ISO 281 International Standard

Input determined slew
bearing tilting moment — 405

Reference bearing specific
service life curve — 406

Determine resulting Slew
bearing tilting moment — 407

401

Determine service life-time
for load spectra — 408

Apportion load operating time
percentages to load spectra — 409

Convert service life-time (revolutions)
to life-time (hours) — 410

---

203 — Mathamatically predicted real-time
operational life-time

FIG.  4

| Drawing No.<br>Roller track dia.<br>$D_L$<br>[mm] | Weight<br>[kg] | Outer diameter (O.D.)<br>$D_a$<br>[mm] | Inner diameter (I.D.)<br>$D_i$<br>[mm] | Overall height<br>$H$<br>[mm] | External bolt circle dia.<br>$L_a$<br>[mm] | Internal bolt circle dia.<br>$L_i$<br>[mm] | Number of bolt holes per hole circle<br>$n$ | Bolt hole diameter<br>$B$<br>[mm] | Bolt size<br>$M$<br>[mm] | Number of grease nipples per level<br>$n_i$ | Diameter<br>$O$<br>[mm] | Diameter<br>$U$<br>[mm] | Ring height<br>$H_1$<br>[mm] | Ring height<br>$H_2$<br>[mm] | Distance at bottom Outer ring/Inner ring<br>$H_u$<br>[mm] | Distance at top Outer ring/Inner ring<br>$H_o$<br>[mm] | Gear P.C.D.<br>$d$<br>[mm] | Module<br>$m$<br>[mm] | Number of teeth<br>$z$ | Addendum modification sign per DIN 3960 October 1976<br>$x{\cdot}m$<br>[mm] | Addendum reduction<br>$k{\cdot}m$<br>[mm] | Tooth width<br>$b$<br>[mm] | Permissible tangential forces, normal<br>[kN] | Permissible tangential forces, maximum<br>[kN] | Curves |
|---|---|---|---|---|---|---|---|---|---|---|---|---|---|---|---|---|---|---|---|---|---|---|---|---|---|
| 121.50.5600.990.41.1502 | 6397 | 5923,2 | 5342 | 221 | 5730 | 5420 | 90 | 39 | 36 | 18 | 5668 | 5540 | 156 | 205 | 16 | 65 | 5856 | 24 | 244 | +12 | -2,4 | 156 | 325,5 | 651,0 | ⑰ |
| 121.50.6000.990.41.1502 | 6663 | 6307,2 | 5742 | 221 | 6114 | 5820 | 96 | 39 | 36 | 18 | 6068 | 5940 | 156 | 205 | 16 | 65 | 6240 | 24 | 260 | +12 | -2,4 | 156 | 325,5 | 651,0 | ⑱ |
| 121.50.6700.990.41.1502 | 7708 | 7027,2 | 6442 | 221 | 6834 | 6520 | 108 | 39 | 36 | 20 | 6768 | 6640 | 156 | 205 | 16 | 65 | 6960 | 24 | 290 | +12 | -2,4 | 156 | 325,5 | 651,0 | ⑲ |

## FIG. 5A

FIG. 5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DD 218641

- DE 102005023252